# EUROPEAN PATENT SPECIFICATION

(11) **EP 3 413 504 B1**
(45) Date of publication and mention of the grant of the patent: **27.11.2019**
(21) Application number: 17305696.1
(22) Date of filing: 09.06.2017
(51) Int. Cl.: H04B 10/00, H04L 9/08

(54) **KEY AGREEMENT METHOD FOR ESTABLISHING AN OPTICAL ENCRYPTED TRANSMISSION AND ASSOCIATED EQUIPMENT**
SCHLÜSSELVEREINBARUNGSMETHODE ZUM ERSTELLEN EINER VERSCHLÜSSELTEN OPTISCHEN ÜBERTRAGUNG AND ENTSPRECHENDE GERÄTE
NÉGOCIATION DE CLÉ POUR ÉTABLIR UNE TRANSMISSION OPTIQUE CHIFFRÉE ET ÉQUIPEMENT ASSOCIÉ

(43) Date of publication of application: 12.12.2018
(73) Proprietor: Nokia Solutions and Networks Oy, 02610 Espoo (FI)
(72) Inventor: WAISBARD, Erez, 44643 Kfar-Saba (IL); VERCHERE, Dominique, 91620 Nozay (FR); PESIC, Jelena, 91620 Nozay (FR); POINTURIER, Yvan, 91620 Nozay (FR)
(74) Representative: Nokia EPO representatives

(56) References cited:
- US-A1- 2010 080 386
- US-A1- 2015 156 179
- US-A1- 2017 012 771
- G 650 Itu-T ET AL: "ITU-T Definitions and test methods for statistical and non-linear related attributes of single-mode fibre and cable", , 31 August 2015 (2015-08-31), pages 1-74, XP055418423, Retrieved from the Internet: URL:https://www.itu.int/rec/dologin_pub.as p?lang=e&id=T-REC-G.650.2-201508-I!!PDF-E& type=items [retrieved on 2017-10-24]

## Description

### BACKGROUND OF THE INVENTION

The present invention relates to the field of optical transmission networks. Optical networks are more and more used for data transmission and notably for sensitive data that need to remain confidential such as personal data (medical records, banking information...), military data, government information...

However, due to the importance of these data, attacks are applied on the optical network equipment such as the optical fibers in order to retrieve the exchanged information thanks to eavesdropping techniques.

In order to prevent such attacks that could lead to data leaks, encryption methods have been developed wherein the transmitted data are encrypted and a protection key is used for deciphering the transmitted signal.

However, with such encryption methods, a protection key needs to be shared between the transmitter and the receiver(s).

Thus, key agreement protocols or key agreement methods have been developed. A well-known key agreement method is the Diffie-Hellman protocol. However, such protocol requires heavy computational processing equipment in the case of a high numbers of users. Another known way to prevent attacks is to use public key infrastructure (PKI) and a trusted party. However, embedded optical equipment have usually a low computational power and do not comprise PKI capabilities.

US 2015/0156179 A1 disloses a method to generate a key based on parameters describing the transmission quality of a communication channel.

US 2010/0080386 A1 discloses a method to generate a key based on phase shifts of laser pulses due to atmospheric eddies.

US 2017/0012771 A1 discloses a method to generate a key based on sampling of communication channel parameters.

### SUMMARY OF THE INVENTION

It is therefore a goal of the present invention to provide a solution to achieve a key agreement method that does not require heavy computational processing equipment and that enable to protect against attacks.

Thus, the invention refers to a key agreement method for establishing an encrypted transmission through an optical link between a first optical node and a second optical node wherein the protection key comprises a value of a physical impairment parameter undergone by the optical signal transmitted through the optical link, the value of the physical impairment parameter being dependent on the length of the link and being identical for both sides of transmission of the optical signal within the optical link.

According to another aspect of the present invention, the protection key comprises the sum of a first random value transmitted from the first optical node to the second optical node, a second random value transmitted from the second optical node to the first optical node (N1) and the value of the physical impairment parameter undergone by the optical signal transmitted through the optical link between the first optical node and the second optical node.

According to another aspect of the present invention, the value of the physical impairment parameter varies with the length of the optical link in a non-linear way.

According to another aspect of the present invention, the value of the physical impairment parameter is constant over time.

According to another aspect of the present invention, the physical impairment parameter corresponds to the polarization mode dispersion differential group delay "PMD DGD".

According to another aspect of the present invention, the key agreement method comprises the following steps:
- applying a first random value of the physical impairment parameter at the first optical node,
- sending a signal with the applied first random value from the first optical node to the second optical node through the optical link,
- determining, at the second optical node, the value of the physical impairment parameter corresponding to the addition of the first random value and the physical impairment undergone along the optical link,
- applying a second random value of the physical impairment parameter at the second optical node,
- sending a signal with the applied second random value from the second optical node to the first optical node through the optical link,
- selecting, for both optical nodes, a protection key corresponding to the addition of the first random value, the second random value and the value of the physical impairment undergone along the optical link.

According to another aspect of the present invention, the sending of a signal with an applied random value comprises the sending of a string of symbols with the applied random value being distributed over the different symbols of the string.

The present invention also refers to an optical transceiver configured for establishing an encrypted transmission with a remote optical transceiver through an optical link using a key agreement method wherein the protection key of the key agreement method comprises a value of a physical impairment parameter undergone by the optical signal transmitted through the optical link.

According to another aspect of the present invention, the optical transceiver is also configured for:
- applying a first random value of the physical impairment parameter to an optical signal,
- sending the optical signal with the applied first random value to the remote transceiver through the optical link,
- receiving an optical signal with an applied second random value from the remote transceiver through the optical link,
- determining a protection key corresponding to the addition of the applied first random value, the applied second random value and the physical impairment undergone along the optical link.

According to another aspect of the present invention, the optical transceiver is also configured for:
- receiving an optical signal with an applied first random value of a physical impairment parameter from a remote transceiver through an optical link,
- determining the value of the physical impairment parameter corresponding to the addition of the first random value and the physical impairment undergone along the optical link,
- transmitting an optical signal with an applied second random value of the physical impairment parameter to the remote transceiver through the optical link,
- determining a protection key corresponding to the addition of the applied first random value, the applied second random value and the physical impairment undergone along the optical link.

The present invention also refers to an optical network comprising at least two optical transceivers as described previously.

The invention is defined by the appended claims.

### BRIEF DESCRIPTION OF THE DRAWINGS

FIG.1 is a diagram of an optical network portion comprising three nodes and three optical links between the nodes and a first type of eavesdropping attack,
FIG.2 is a diagram of the network of Fig.1 with a second type of eavesdropping attack,
FIG.3 is a flowchart of the different steps of a key agreement method according to the present invention,

### DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

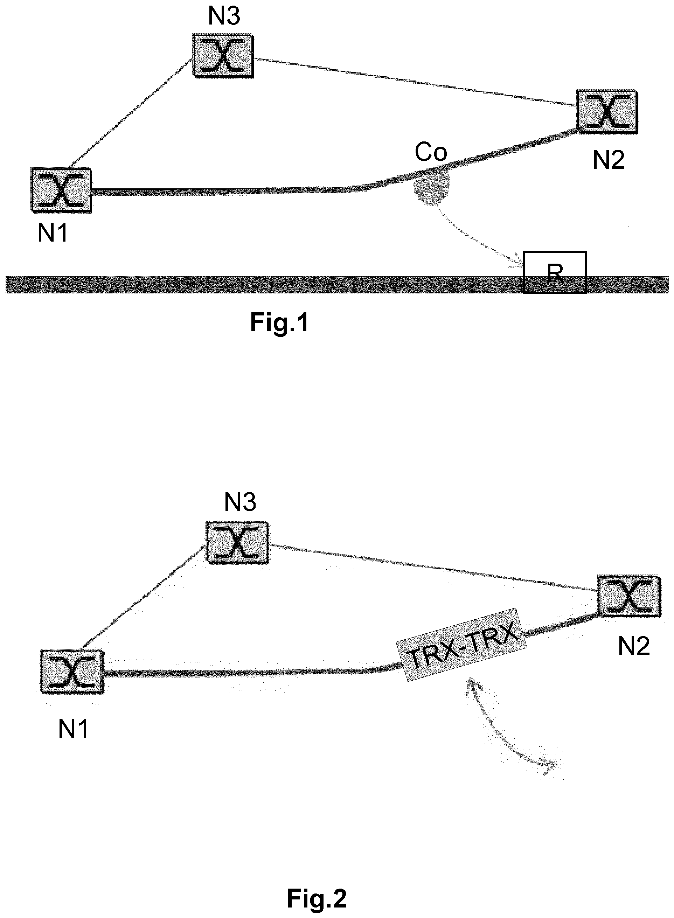

The present invention refers to a key agreement method for establishing an encrypted transmission through an optical link between a first optical node and a second optical node. Fig.1 represents a portion of an optical network comprising three nodes noted N1, N2 and N3 (each node comprising a transmitter and a receiver, also called transceiver). An encrypted transmission needs to be established between N1 and N2 wherein the encryption technique requires the exchange of a protection key. The protection key has to be exchanged without enabling an eavesdropper located along the link N1-N2 to access the protection key. The eavesdropper is represented by the coupler Co in Fig.1. Indeed, by using a coupler or by bending the optical fiber associated with the link N1-N2, it is possible for the eavesdropper to retrieve a part of the optical signal and to redirect this part of the signal toward a receiver R in order to detect the redirected signal and get access to the exchanged data so that the protection key cannot be transmitted through the optical link N1-N2 without protection to prevent the eavesdropper to access to the protection key and then to the encrypted data transmitted later.

In order to prevent such access to the protection key to the eavesdropper, the protection key comprises a value of a physical impairment parameter undergone by the optical signal transmitted through the optical link N1-N2, the value of this physical impairment parameter being dependent on the length of the link N1-N2 (the value of the physical impairment parameter varies with the length of the optical link). The physical impairment parameter refers to a modification, generally a degradation, of a parameter of the transmitted signal along the optical link N1-N2 due to the physical properties of the optical link N1-N2 and is therefore inherent to the optical link.

In order to optimize the security of the key agreement method, the physical impairment parameter may be chosen to be symmetric with respect to the direction of the transmission along the link N1-N2 (the physical impairment parameter value is the same from N1 to N2 or from N2 to N1). It has to be noted that an optical link may comprise more than one optical fibers (for example a first optical fiber used for the traffic in one direction and a second optical fiber for the traffic in the other direction). In other words, the physical impairment parameter does not show any hysteresis along the optical link (the value of the impairment parameter is the same in both directions). Furthermore, the physical impairment parameter may be chosen in order to be accumulative with the transmission distance in a non-linear way. The non-linearity of the parameter makes it even more difficult for an eavesdropper to find the key. The physical impairment parameter may be chosen to be independent or almost independent of the number of crossed components along the optical link. The physical impairment parameter may also be chosen to be stable along time. This is generally the case if the environmental conditions of the optical link remain identical, for example the temperature remains constant in case of buried optical links.

The chosen physical impairment parameter may be the polarization mode dispersion differential group delay (PMD DGD). Such parameter combines the different conditions above-described. Indeed, the PMD DGD parameter noted Δ_{T} varies according to the following equation:
*Δ_{T}*=*D_{PMD}*^{∗}√*L̅* with D_{PMD} a coefficient dependent on the optical link features and L the length of the optical link. As a consequence, the value of the PMD DGD varies in a non-linear way with the length of the optical link and remains stable along time. Furthermore, the PMD DGD depends on the irregularities (non circularity) of the core of the optical fiber along the link and remains the same whatever the direction of the optical signal transmission. Moreover, the PMD DGD is a parameter which is generally already determined in order to be digitally compensated at the reception of the optical signal so that the determination of the PMD DGD does not requires additional hardware equipment which is the case for coherent detection (which is used in the present case). However, other physical impairment parameters involving at least some of the above-mentioned features may also be used without departing from the scope of the present invention. For example a combination of PMD DGD with another physical impairment parameter may also be used.

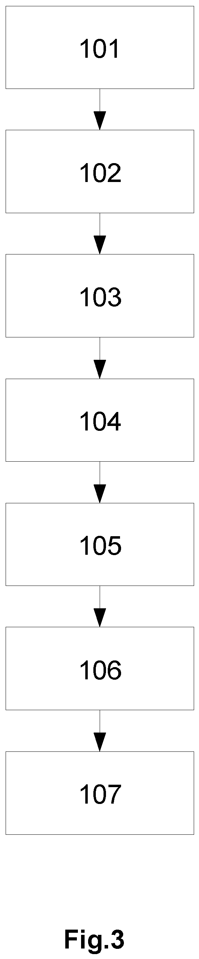

In order to better understand the implementation of the present invention, the different steps of the key agreement method will now be described based on fig.1 and fig.3 in the case of an exchange of a protection key using a PMD DGD parameter between a transceiver located in node N1 and a remote transceiver located in node N2.

The first step 101 refers to the application, at the node N1, of a first random level noted A of PMD DGD on an optical signal. Indeed, the PMD DGD can be emulated by a transmitter by applying a filter (generally a digital filter) in order to introduce a delay between the two polarizations. The signal corresponding to the key may have different lengths, usually in the range of 100 or 1000 bits. Thus, in order to limit the degradation of the transmitted symbols, the applied PMD DGD may be limited for each transmitted symbols but the information corresponding to the first random level A of PMD DGD can be applied on the entire string of bits corresponding to the key (each transmitted bit comprising a part of the key). A limited number of levels of PMD DGD is therefore required which leads to an easier determination of the PMD DGD level at the reception.

The second step 102 refers to the sending of the optical signal obtained in the step 101 with the level A of PMD DGD from the node N1 to the node N2 along the link N1-N2.

The third step 103 refers to the reception, at the node N2, of the signal sent in step 102 and the determination of the value of the PMD DGD corresponding to the PMD DGD accumulated along the transmission from node N1 to node N2 noted C added to the initial level A of PMD DGD. The detected value of PMD DGD corresponds therefore the value A+C.

The fourth step 104 relates to the application, at the node N2, of a second random level noted B of PMD DGD on an optical signal. This application may be similar to the application described in step 101.

The fifth step 105 refers to the sending of the optical signal obtained in the step 104 with the level B of PMD DGD from the node N2 to the node N1 along the link N2-N1.

The sixth step 106 relates to the reception, at the node N1, of the signal sent in step 105 and the determination of the value of the PMD DGD corresponding to the PMD DGD accumulated along the transmission from node N2 to node N1 noted C added to the initial level B of PMD DGD. The detected value of PMD DGD corresponds therefore the value B+C.

The seventh step 107 refers to the selection, for both nodes N1 and N2, of a protection key corresponding to the addition of the first random value A, the second random value B and the value C of the physical impairment undergone along the optical link N1-N2. Indeed, the node N1 has determined in step 106 the value B+C and has applied in step 101 the value A so that the node N1 is able to compute the value A+B+C. Accordingly, the node N2 has determined the value A+C in step 103 and has applied the value B in step 104 so that the node N2 is able to compute the value A+B+C which corresponds to the protection key.

It has to be noted that the order of some of the steps presented previously may be exchanged, for example the fourth step 104 may be achieved before the third step 103.

As a single protection key has been exchanged by the nodes N1 and N2, any encryption algorithm based on a protection key may then be used for establishing an encrypted transmission between node N1 and node N2 along the link N1-N2.

Indeed, in the case of a eavesdropper using the coupler Co in fig.1 to retrieve a part of the optical signals exchanged between the node N1 and the node N2, the eavesdropper is not able to determine the value A+B+C as the eavesdropper is located somewhere between N1 and N2 so that the value of PMD DGD measured by the eavesdropper corresponds to the value A+D (D being the value of PMD DGD accumulated between the node N1 and the location of the eavesdropper) for the transmission of step 102 and to the value B+E (E being the value of PMD DGD accumulated between the node N2 and the location of the eavesdropper) for the transmission of step 105 and the eavesdropper cannot retrieve the value A+B+C from the values A+D and B+E.

In the same way, the key agreement method may be used to established secured connections between the nodes N1 and N3 along the link N1-N3 or between the nodes N2 and N3 along the link N2-N3.

Furthermore, in optical networks, some parameters, such as the optical power level, are monitored in each node so that an eavesdropper may usually be detected. Indeed, in case of bending of the optical fiber to retrieve a part of the signal, such bending lead to a drop of the power level that can be detected by a monitoring equipment of the power level.

In the same way in the case of a cutting of the optical fiber and the introduction of back to back transceivers at the cutting location by the eavesdropper such as described in fig.2, the disconnection occurring due to the cutting is detected by the monitored equipment of the optical network. In fig.2, the eavesdropper is represented by the TRX-TRX equipment corresponding to a back to back transceiver.

Thus, the use of the above-described key agreement method based on the use of a physical impairment parameter enables to exchange protection keys without requiring high processing capacities and without implementing additional hardware equipment as the physical impairment parameters such as the PMD DGD are usually already measured by the used equipment for the signal processing. Furthermore, the combination with a monitoring of some parameters such as the power level enables to detect potential attacks from eavesdropper such as Man in the Middle (MiTM) attacks.

The functions of the various elements shown in the FIGs., including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Key agreement method for establishing an encrypted transmission through an optical link between a first optical node (N1) and a second optical node (N2) wherein the protection key comprises a value of a physical impairment parameter undergone by the optical signal transmitted through the optical link (N1-N2), the value of the physical impairment parameter being dependent on the length (L) of the link and being identical for both sides of transmission of the optical signal within the optical link (N1-N2), the method comprising the following steps:
- applying a first random value of the physical impairment parameter at the first optical node (101),
- sending a signal with the applied first random value from the first optical node to the second optical node through the optical link (102),
- determining, at the second optical node, the received value of the physical impairment parameter corresponding to the addition of the first random value and the physical impairment undergone along the optical link (103),
- applying a second random value of the physical impairment parameter at the second optical node (104),
- sending a signal with the applied second random value from the second optical node to the first optical node through the optical link (105),
- determining, at the first optical node, the received value of the physical impairment parameter corresponding to the addition of the second random value and the physical impairment undergone along the optical link (106)
- selecting, for both optical nodes, a protection key by adding at each node their respective determined value received over the optical link with their respective applied random value, the protection key corresponding therefore to the first random value, the second random value and the value of the physical impairment undergone along the optical link (107) wherein the physical impairment parameter corresponds to the polarization mode dispersion differential group delay "PMD DGD".

2. Key agreement method in accordance with claim 1 wherein the value of the physical impairment parameter varies with the length (L) of the optical link in a non-linear way.

3. Key agreement method in accordance with one of the previous claims wherein the value of the physical impairment parameter is constant over time.

4. Key agreement method in accordance with one of the previous claims wherein the sending of a signal with an applied random value comprises the sending of a string of symbols with the applied random value being distributed over the different symbols of the string.

5. Optical transceiver configured for establishing an encrypted transmission with a remote optical transceiver through an optical link using a key agreement method wherein the protection key of the key agreement method comprises a value of a physical impairment parameter undergone by the optical signal transmitted through the optical link, the value of the physical impairment parameter being dependent on the length of the link and being identical for both sides of the transmission of the optical signal within the optical link, the said optical transceiver being configured for:
- applying a first random value of the physical impairment parameter to an optical signal (101),
- sending the optical signal with the applied first random value to the remote transceiver through the optical link (102),
- receiving an optical signal with an applied second random value of the physical impairment parameter from the remote transceiver through the optical link (105),
- determining the received value of the physical impairment parameter corresponding to the addition of the second random value and the physical impairment undergone along the optical link (106),
- determining a protection key by adding the applied first random value and the determined value of the physical impairment parameter received over the optical link (107), the protection key corresponding therefore to the first random value, the second random value and the value of the physical impairment undergone along the optical link (107) wherein the physical impairment parameter corresponds to the polarization mode dispersion differential group delay "PMD DGD".

6. Optical network comprising at least two optical transceivers in accordance with claim 5.

## Patentansprüche

1. Schlüsselvereinbarungsverfahren zum Erstellen einer verschlüsselten Übertragung über eine optische Verbindung zwischen einem ersten optischen Knoten (N1) und einem zweiten optischen Knoten (N2), wobei der Schutzschlüssel einen Wert eines Parameters einer physikalischen Beeinträchtigung umfasst, die an dem über die optische Verbindung (N1-N2) übertragenen optischen Signal erfolgt, wobei der Wert des Parameters der physikalischen Beeinträchtigung von der Länge (L) der Verbindung abhängig ist und für beide Seiten der Übertragung des optischen Signals innerhalb der optischen Verbindung (N1-N2) identisch ist, wobei das Verfahren die folgenden Schritte umfasst:
- Anwenden eines ersten Zufallswertes des Parameters der physikalischen Beeinträchtigung auf den ersten optischen Knoten (101),
- Senden eines Signals mit dem angewandten ersten Zufallswert vom ersten optischen Knoten an den zweiten optischen Knoten über die optische Verbindung (102),
- Bestimmen des empfangenen Wertes des Parameters der physikalischen Beeinträchtigung am zweiten optischen Knoten entsprechend der Addition des ersten Zufallswertes und der entlang der optischen Verbindung (103) erfolgten physikalischen Beeinträchtigung,
- Anwenden eines zweiten Zufallswertes des Parameters der physikalischen Beeinträchtigung am zweiten optischen Knoten (104),
- Senden eines Signals mit dem angewandten zweiten Zufallswert vom zweiten optischen Knoten an den ersten optischen Knoten über die optische Verbindung (105),
- Bestimmen des empfangenen Wertes des Parameters der physikalischen Beeinträchtigung am ersten optischen Knoten entsprechend der Addition des zweiten Zufallswertes und der entlang der optischen Verbindung (106) erfolgten physikalischen Beeinträchtigung,
- Auswählen eines Schutzschlüssels für beide optischen Knoten durch Addieren ihres jeweiligen bestimmten Wertes, der über die optische Verbindung empfangen wurde, an jedem Knoten mit ihrem jeweiligen angewandten Zufallswert, wobei der Schutzschlüssel somit dem ersten Zufallswert, dem zweiten Zufallswert und dem Wert der physikalischen Beeinträchtigung entlang der optischen Verbindung (107) entspricht, wobei der Parameter der physikalischen Beeinträchtigung der differenziellen Gruppenlaufzeit der Polarisationsmodendispersion "PMD DGD" entspricht.

2. Schlüsselvereinbarungsverfahren nach Anspruch 1, wobei der Wert des Parameters der physikalischen Beeinträchtigung mit der Länge (L) der optischen Verbindung nichtlinear variiert.

3. Schlüsselvereinbarungsverfahren nach einem der vorhergehenden Ansprüche, wobei der Wert des Parameters der physikalischen Beeinträchtigung über die Zeit konstant ist.

4. Schlüsselvereinbarungsverfahren nach einem der vorhergehenden Ansprüche, wobei das Senden eines Signals mit einem angewandten Zufallswert das Senden einer Zeichenkette umfasst, wobei der angewandte Zufallswert über die verschiedenen Zeichen der Zeichenkette verteilt ist.

5. Optischer Sender-Empfänger, der dazu ausgelegt ist, eine verschlüsselte Übertragung mit einem entfernten optischen Sender-Empfänger über eine optische Verbindung unter Verwendung eines Schlüsselvereinbarungsverfahrens herzustellen, wobei der Schutzschlüssel des Schlüsselvereinbarungsverfahrens einen Wert eines Parameters einer physikalischen Beeinträchtigung umfasst, die an dem über die optische Verbindung übertragenen optischen Signal erfolgt, wobei der Wert des Parameters der physikalischen Beeinträchtigung von der Länge der Verbindung abhängig ist und für beide Seiten der Übertragung des optischen Signals innerhalb der optischen Verbindung identisch ist,
wobei der optische Sender-Empfänger ausgelegt ist zum:
- Anwenden eines ersten Zufallswertes des Parameters der physikalischen Beeinträchtigung auf ein erstes optisches Signal (101),
- Senden des optischen Signals mit dem angewandten ersten Zufallswert an den entfernten Sender-Empfänger über die optische Verbindung (102),
- Empfangen eines optischen Signals mit dem angewandten zweiten Zufallswert des Parameters der physikalischen Beeinträchtigung von dem entfernten Sender-Empfänger über die optische Verbindung (105),
- Bestimmen des empfangenen Wertes des Parameters der physikalischen Beeinträchtigung entsprechend der Addition des zweiten Zufallswertes und der entlang der optischen Verbindung (106) erfolgten physikalischen Beeinträchtigung,
- Bestimmen eines Schutzschlüssels durch Addieren des angewandten ersten Zufallswertes und des bestimmten Wertes des über die optische Verbindung (107) empfangenen Parameters der physikalischen Beeinträchtigung, wobei der Schutzschlüssel somit dem ersten Zufallswert, dem zweiten Zufallswert und dem Wert der entlang der optischen Verbindung (107) erfolgten physikalischen Beeinträchtigung entspricht, wobei der Parameter der physikalischen Beeinträchtigung der differenziellen Gruppenlaufzeit der Polarisationsmodendispersion "PMD DGD" entspricht.

6. Optisches Netzwerk mit mindestens zwei optischen Sender-Empfängern nach Anspruch 5.

## Revendications

1. Procédé d'accord de clé pour établir une transmission chiffrée par l'intermédiaire d'une liaison optique entre un premier nœud optique (N1) et un deuxième nœud optique (N2), la clé de protection comprenant une valeur d'un paramètre d'altération physique subie par le signal optique transmis par l'intermédiaire de la liaison optique (N1-N2), la valeur de ce paramètre d'altération physique dépendant de la longueur (L) de la liaison et étant identique pour les deux côtés de transmission du signal optique à l'intérieur de la liaison optique (N1-N2), ce procédé comprenant les étapes suivantes :
- l'application d'une première valeur aléatoire du paramètre d'altération physique au niveau du premier nœud optique (101),
- l'envoi d'un signal avec la première valeur aléatoire appliquée du premier nœud optique au deuxième nœud optique par l'intermédiaire de la liaison optique (102),
- la détermination, au niveau du deuxième nœud optique, de la valeur reçue du paramètre d'altération physique correspondant à l'addition de la première valeur aléatoire et du paramètre d'altération physique subie le long de la liaison optique (103),
- l'application d'une deuxième valeur aléatoire du paramètre d'altération physique au niveau du deuxième nœud optique (104),
- l'envoi d'un signal avec la deuxième valeur aléatoire appliquée du deuxième nœud optique au premier nœud optique par l'intermédiaire de la liaison optique (105),
- la détermination, au niveau du premier nœud optique, de la valeur reçue du paramètre d'altération physique correspondant à l'addition de la deuxième valeur aléatoire et du paramètre d'altération physique subie le long de la liaison optique (106),
- la sélection, pour les deux nœuds optiques, d'une clé de protection en additionnant au niveau de chaque nœud leur valeur déterminée respective sur la liaison optique avec leur valeur aléatoire appliquée respective, la clé de protection correspondant donc à la première valeur aléatoire, à la deuxième valeur aléatoire et à la valeur de l'altération physique subie le long de la liaison optique (107), le paramètre d'altération physique correspondant au temps de propagation de groupe différentiel de dispersion en mode de polarisation « PMD DGD ».

2. Procédé d'accord de clé selon la revendication 1, dans lequel la valeur du paramètre d'altération physique varie avec la longueur (L) de la liaison optique d'une manière non linéaire.

3. Procédé d'accord de clé selon l'une quelconque des revendications précédentes, dans lequel la valeur du paramètre d'altération physique est constante au fil du temps.

4. Procédé d'accord de clé selon l'une quelconque des revendications précédentes, l'envoi d'un signal avec une valeur aléatoire appliquée comprenant l'envoi d'une chaîne de symboles avec la valeur aléatoire appliquée étant répartie sur les différents symboles de la chaîne.

5. Emetteur-récepteur optique configuré de façon à établir une transmission chiffrée avec un émetteur-récepteur optique distant par l'intermédiaire d'une liaison optique en utilisant un procédé d'accord de clé, la clé de protection de ce procédé d'accord de clé comprenant une valeur d'un paramètre d'altération physique subie par le signal optique transmis par l'intermédiaire de la liaison optique, la valeur de ce paramètre d'altération physique dépendant de la longueur de la liaison et étant identique pour les deux côtés de la transmission du signal optique à l'intérieur de la liaison optique, ledit émetteur-récepteur optique étant configuré de façon à :
- appliquer une première valeur aléatoire du paramètre d'altération physique sur un signal optique (101),
- envoyer le signal optique avec la première valeur aléatoire appliquée à l'émetteur-récepteur distant par l'intermédiaire de la liaison optique (102),
- recevoir de l'émetteur-récepteur distant, par l'intermédiaire de la liaison optique (105), un signal optique avec une deuxième valeur aléatoire appliquée du paramètre d'altération physique,
- déterminer la valeur reçue du paramètre d'altération physique correspondant à l'addition de la deuxième valeur aléatoire et du paramètre d'altération physique subie le long de la liaison optique (106),
- déterminer une clé de protection en additionnant la première valeur aléatoire et la valeur déterminée du paramètre d'altération physique reçue sur la liaison optique (107), cette clé de protection correspondant donc à la première valeur aléatoire, à la deuxième valeur aléatoire et à la valeur de l'altération physique subie le long de la liaison optique (107), le paramètre d'altération physique correspondant au temps de propagation de groupe différentiel de dispersion en mode de polarisation « PMD DGD ».

6. Réseau optique comprenant au moins deux émetteurs-récepteurs optiques selon la revendication 5.
